(19) Europäisches Patentamt
European Patent Office
Office européen des brevets

(11) **EP 3 770 205 A1**

(12) **EUROPEAN PATENT APPLICATION**

(43) Date of publication:
**27.01.2021 Bulletin 2021/04**

(51) Int Cl.:
*C08J 3/12* (2006.01)  *B29B 9/12* (2006.01)
*B29B 9/16* (2006.01)  *B29C 64/153* (2017.01)
*B29C 64/218* (2017.01)  *B29C 64/295* (2017.01)
*B33Y 10/00* (2015.01)  *B33Y 30/00* (2015.01)

(21) Application number: **20187188.6**

(22) Date of filing: **22.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.07.2019 JP 2019138133**

(71) Applicant: **Ricoh Company, Ltd.**
**Tokyo 143-8555 (JP)**

(72) Inventors:
• **IIDA, Sohichiroh**
**Tokyo, 143-8555 (JP)**
• **IWATSUKI, Hitoshi**
**Tokyo, 143-8555 (JP)**
• **OGAWA, Satoshi**
**Tokyo, 143-8555 (JP)**
• **SUN, Yunsheng**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **RESIN POWDER FOR SOLID FREEFORM FABRICATION, DEVICE FOR FABRICATING SOLID FREEFORM FABRICATION OBJECT, AND METHOD OF FABRICATING SOLID FREEFORM FABRICATION OBJECT**

(57)     A resin powder for solid freeform fabrication having a flow velocity index of 1.05 to 1.21 which maintains the degree of smoothness of a thin layer formed with the resin powder for solid freeform fabrication even when the speed of supplying the resin powder for solid freeform fabrication using a recoater is increased and reduce lowering of the degree of smoothness of the thin layer caused by the resin powder for solid freeform fabrication that has scattered and accumulated on the recoater and others.

## FIG. 1

**Description**

BACKGROUND

Technical Field

The present disclosure relates to a resin powder for solid freeform fabrication, a device for fabricating a solid freeform fabrication object, and a method of fabricating solid freeform fabrication object.

Description of the Related Art

A powder bed fusion (PBF) method is known as a method of manufacturing a solid freeform fabrication object (three-dimensional object). The PBF method includes a selective a laser sintering (SLS) method to form a solid freeform fabrication object by selective irradiation of laser beams and a selective mask sintering (SMS) method in which laser beams are applied in a planar manner using a mask.
The PBF method includes selectively irradiating a thin layer formed of powder supplied by a recoater such as a roller with laser beams to melt the powder and fuse the molten powder together, forming another thin layer on the fused thin layer, and repeating the irradiating the forming to sequentially laminate the fused thin layers, thereby forming a solid freeform fabrication object.
An additive manufacturing material having excellent fluidity has been disclosed in JP-6193493-B1 (WO20115/194678) by which a uniform, thin, and flat layer of powder material is formed.
However, there is trade-off between the increase in speed of supplying a resin powder for solid freeform fabrication using a recoater and the smoothness of a thin layer formed of the supplied resin powder. When the resin powder is supplied using a recoater, the resin powder scatters and accumulates on the upper portion of a device such as a recoater. The accumulated resin powder falls on the thin layer being formed, which degrades the smoothness of the thin layer.

SUMMARY

According to embodiments of the present disclosure, the resin powder for solid freeform fabrication is provided which maintains the degree of smoothness of a thin layer formed with the resin powder for solid freeform fabrication even when the speed of supplying the resin powder for solid freeform fabrication using a recoater is increased and reduce lowering of the degree of smoothness of the thin layer caused by the resin powder for solid freeform fabrication that has scattered and accumulated on the recoater and others.
According to embodiments of the present disclosure, a resin powder for solid freeform fabrication is provided which contains resin particles, wherein the resin powder has a flow velocity index of from 1.05 to 1.21.
As another aspect of embodiments of the present disclosure, 10. a device for fabricating a solid freeform fabrication object is provided which includes an accommodating device configured to accommodate a resin powder, a layer forming device configured to move the resin powder accommodated in the accommodating device and form a layer containing the resin powder and a melting device configured to melt the layer with electromagnetic radiation, wherein the resin powder contains resin particles and has a flow velocity index of from 1.05 to 1.21.
As another aspect of embodiments of the present disclosure, a method of fabricating a solid freeform fabrication object, is provided which includes forming a layer containing a resin powder for solid freeform fabrication by moving the resin powder by a layer forming device, melting the layer by irradiating the layer with electromagnetic radiation, and repeating the forming and the melting, wherein the resin powder comprises resin particles and has a flow velocity index of from 1.05 to 1.21.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a schematic diagram illustrating an example of the device for fabricating a solid freeform fabrication object; and
FIG. 2 is a flowchart illustrating an example of the method of fabricating a solid freeform fabrication object.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Next, one embodiment of the present disclosure is described.

Resin Powder for Solid Freeform Fabrication

The resin powder for solid freeform fabrication of the present embodiment contains resin particles and other optional additives such as a toughening agent, a flame retardant, a plasticizer, a stabilizer, an antioxidant, a crystal nucleating agent, and fluidizer. These resin particles and additives can be used alone or in combination.

The method of adding additives is not particularly limited and includes, but is not limited to, a method of adding an additive separately from resin particles, a method of enclosing an additive in resin particles, and a method of attaching an adhesive to the surface of resin particles.

"For solid freeform fabrication" means for use in a powder additive manufacturing. Powder additive manufacturing is a fabrication method of solidifying layer by layer by applying at least one of laser beams, a binder, and an endothermic agent to a powder material. Of these, the resin powder for solid freeform fabrication of the present embodiment is preferably applied to selective laser sintering (SLS) by which powder is selectively exposed to laser beams to form a solid freeform fabrication object.

The resin powder for solid freeform fabrication of the present embodiment may be used in binder jetting (BJ) or high speed sintering (HSS).

Property of Resin Powder for Solid Freeform Fabrication

Flow Velocity Index

The flow velocity index of the resin powder for solid freeform fabrication is a value obtained by dividing a total energy 1 of resin powder for solid freeform fabrication calculated according to the measuring conditions 1 below by a total energy 2 of resin powder for solid freeform fabrication calculated according to the measuring conditions 2 below and is from 1.05 to 1.21 and preferably from 1.05 to 1.16. It is possible to prevent the resin powder for solid freeform fabrication from scattering and accumulating on the upper part of a device such as a recoater when the flow velocity index is 1.05 or above. When the flow velocity index is 1.21 or below, degradation of smoothness of the thin layer is reduced even if the moving speed (hereinafter referred to as recoating speed) of a recoater is increased for forming a thin layer of a resin powder for solid freeform fabrication. This enables forming a solid freeform fabrication object having a high level of smoothness.

The total energy 1 and the total energy 2 required to calculate the flow velocity index are calculated by a powder flowability analyzer. A powder flow tester of Powder Rheometer® FT4 (manufactured by Freeman Technology Ltd.) is used as the powder flowability analyzer. The powder flow tester calculates the total energy 1 and the total energy 2 from the torque and load acting on a rotating blade moving through a resin powder for solid freeform fabrication. A 25 ml spirit vessel (cup diameter of 25 mm) and a blade having a blade diameter of 23.5 mm are used for measuring.

The total energy 1 of the resin powder for solid freeform fabrication is obtained in the following manner using a powder flow tester. A resin powder for solid freeform fabrication is slowly loaded into a 25 ml spirit vessel and subjected to conditioning treatment five times using a powder flow tester followed by scraping-off to remove excessive resin powder for solid freeform fabrication. The resin powder for solid freeform fabrication after the conditioning treatment is placed in the powder flow tester to measure the total energy 1 according to the following measuring conditions 1. The conditioning treatment is to make the resin powder for solid freeform fabrication in the spirit vessel uniform 1.

Measuring Conditions 1

- Rate of rotation of blade: -10 mm/s
- Invasion angle of blade: -5 degree

The total energy 2 of the resin powder for solid freeform fabrication is obtained in the following manner using a powder flow tester. A resin powder for solid freeform fabrication is slowly loaded into a 25 ml spirit vessel and subjected to conditioning treatment five times using a powder flow tester followed by scraping-off to remove excessive resin powder for solid freeform fabrication. The resin powder for solid freeform fabrication after the conditioning treatment is placed in a powder flow tester to measure the total energy 2 according to the following measuring conditions 2. The conditioning treatment is to make the resin powder for solid freeform fabrication in the spirit vessel uniform.

Measuring Conditions 2

- Rate of rotation of blade: -100 mm/s
- Invasion angle of blade: -5 degree

The reason for producing a solid freeform fabrication object having a high level of smoothness using a resin powder for solid freeform fabrication having the flow velocity in the range mentioned above is described. Existing resin powders for solid freeform fabrication for use in powder additive manufacturing contain particles having a wide range in size and forms from irregular forms to substantially truly spherical. Solid freeform fabrication using such resin powder for solid freeform fabrication is successful at low recoating speeds but as the recoating speed increases, thin surfaces become rough, which results in the production of a solid freeform fabrication object with a low level of smoothness. In contrast, the resin powder for solid freeform fabrication of the present embodiment has uniformity that is enhanced by controlling powder properties such as particle size distribution and forms of resin particles so that load uniformly acts on individual resin particles even at high recoating speed, which enables forming thin layers with less roughness.

One index indicating that load is uniformly acting on individual resin particles is the flow velocity index mentioned above.

The device and the method of controlling the flow velocity index of from 1.05 to 1.21 is not particularly limited. For example, it is suitable to control the ratio (Mv/Mn) of the mean volume diameter Mv of resin particles contained in resin powder for solid freeform fabrication to the mean number diameter thereof, average circularity, form of resin particles, and spheroidizing to resin particles, or use a fluidizer.

Shearing Energy

The shearing energy of resin powder for solid freeform fabrication is calculated by dividing the total energy 1 by the conditioning aerated bulk density of the resin powder for solid freeform fabrication and is preferably from 300 to 650 mJ·cm$^3$/g and more to preferably from 300 to 500 mJ·cm$^3$/g. When the shearing energy is 300 mJ·cm$^3$/g or greater, it is possible to prevent the resin powder for solid freeform fabrication from accumulating on the upper part of a member such as recoater caused by scattering of the resin powder for solid freeform fabrication. When the shearing energy is 650 mJ·cm$^3$/g or less, it is possible to prevent smoothness of a thin layer from deteriorating even when the recoating speed is increased. This enables forming a solid freeform fabrication object having a high level of smoothness.

The conditioning aerated bulk density required to calculate shearing energy is calculated from the resin powder for solid freeform fabrication obtained after the conditioning treatment by a powder flowability analyzer. A powder flow tester of Powder Rheometer® FT4 (manufactured by Freeman Technology Ltd.) is used as the powder flowability analyzer. The powder flowability analyzer (powder flow tester) puts a blade in rotation into a resin powder for solid freeform fabrication to make the resin powder for solid freeform fabrication uniform (conditioning treatment). A 25 ml spirit vessel (cup diameter of 25 mm) and a blade having a blade diameter of 23.5 mm are used for measuring. It is necessary to make air sufficiently pass through the powder during the conditioning treatment. For example, the rotation direction of the blade is set to the entering direction (in other words, in direction in which the blade cuts the powder) of the blade into the powder.

The conditioning aerated bulk density is obtained as follows. A resin powder for solid freeform fabrication is slowly loaded into a 25 ml spirit vessel and subjected to conditioning treatment five times using a powder flow tester followed by scraping-off to remove excessive resin powder for solid freeform fabrication. The mass of the resin powder for solid freeform fabrication after the conditioning treatment is divided by the volume of the spirit vessel to calculate the conditioning aerated bulk density.

Resin Particle

The resin particle is preferably a thermoplastic resin , which is plasticized and melted on heating. An example of the thermoplastic resin is a crystalline resin. The crystalline resin has a melting peak as measured according to ISO 3146 regulation (Plastics - Determination of melting behaviour, corresponding to JIS K7121 format).

It is preferable to contain at least one member selected from the group consisting of a polyolefin resin, polyamide resin, polyester resin, polyether resin, polyphenylene sulfide resin, liquid crystal polymer (LCP), polyacetal (POM) resin, polyimide resin, and fluorochemical resin as a material constituting the resin particle. These can be used alone or in combination.

Specific examples of the polyolefine include, but are not limited to, polyethylene and polypropylene. These can be used alone or in combination.

Specific examples of the polyamide resin include, but are not limited to, polyamide 410 (PA410), polyamide 6 (PA6), polyamide 66 (PA66), polyamide 610 (PA610), polyamide 612 (PA612), polyamide 11 (PA11), polyamide 12 (PA12), semi-aromatic polyamide 4T (PA4T), polyamide MXD6 (PAMXD6), polyamide 6T (PA6T), polyamide 9T (PA9T), and polyamide 10T (PA10T). These can be used alone or in combination.

Specific examples of the polyester resin include, but are not limited to, polyethyleneterephthalate (PET), polybutadiens terephthalate (PBT), and polylactic acid (PLA). Polyester including aromatic series partially including terephthalic acid and isophthalic acid is also suitably used to impart heat resistance.

Specific examples of the polyether resin include, but are not limited to, polyether etherketone (PEEK), polyetherketone (PEK), polyether ketone ketone (PEKK), polyaryl ether ketone (PAEK), polyether ether ketone ketone (PEEKK), and polyether ketone ether ketone ketone (PEKEKK).

When a thermoplastic resin constitutes the resin particle, the thermoplastic resin preferably has a melting point of 100 degrees C or higher as measured according to ISO 3146 regulation. It is preferable that the melting point of the resin powder as measured according to ISO 3146 regulation be 100 degrees C or higher because it is within the heat resistance temperature range for exteriors of products and others. The melting point can be measured according to ISO 3146 regulation (corresponding to JIS K7121 format) utilizing differential scanning calorimetry (DSC). When a plurality of melting points exist, the melting point on the higher temperature side is selected.

When the resin particle is a crystalline resin, a crystal-controlled crystalline thermoplastic resin is preferable. Such a crystalline thermoplastic resin can be obtained by a known method utilizing exterior stimuli such as heat treatment, drawing, crystal nuclear material, and ultrasonic wave treatment. Crystalline thermoplastic resins having controlled crystal size and crystalline orientation are more preferable because errors occurring rate during recoating in a high temperature environment can be reduced.

The method of manufacturing the crystal-controlled crystalline thermoplastic resin has no particular limit and can be suitably selected to suit to a particular application. It is possible to use annealing by which resin powder is heated to the glass transition temperature or higher of each resin to increase crystallinity or add a crystal nucleating agent to further increase crystallinity followed by annealing. Also, it is suitable to use ultrasonic wave treatment or dissolve a resin in a solvent and slowly evaporate it to enhance crystallinity. It is also suitable to select a method of applying an external electric field to grow crystal and a processing method such as pulverization and cutting for a resin further drawn for higher crystallization and orientation.

The proportion of the resin particle is not particularly limited and is preferably 50 percent by mass or greater, more preferably 75 percent by mass or greater, and furthermore preferably 90 percent by mass or greater in the total mass of the resin powder for solid freeform fabrication. When the proportion is 50 percent or more, packing density can be significantly increased, which is effective to enhance the dimension accuracy and the strength of a solid freeform fabrication object obtained.

Particle Size Distribution of Resin Particle

The ratio (Mv/Mn) of the mean volume diameter Mv of the resin particles contained in the resin powder for solid freeform fabrication to the mean number diameter thereof is preferably from 1.10 to 1.17. When the ratio is 1.10 or greater, the resin particles are prevented from being excessively uniform. It is accordingly possible to prevent the resin powder for solid freeform fabrication from excessively moving during recoating. When the ratio of Mv/Mn is 1.17 or less, the size of the resin particle becomes uniform and forces are evenly applied to each particle by a recoater during recoating. Smoothness of a thin layer can be kept with these forces even when the recoating speed is increased.

The Mv and the Mn of resin particles can be measured by using a particle size distribution measuring instrument (microtrac MT3300EXII, manufactured by MicrotracBEL Corp.). Drying methods (atmosphere) without using a solvent can be taken for this device because refractive index if a target resin is used for measuring.

Average Circularity of Resin Particle

The average circularity of resin particle is preferably from 0.80 to 0.96.

When the average circularity is 0.80 or greater, the form of particles in the resin powder for solid freeform fabrication is spherical enough to allow the particles to readily roll and to increase the uniformity of the form. It is thus possible to maintain the smoothness of a thin layer formed with the resin powder even when the recoating speed is increased.

Providing an average circularity of 0.96 or less prevents the resin particles from excessively rolling and not holding fused matter on the spot, which gives the solid freeform fabrication objects produced greater form accuracy.

The average circularity is an index for indicating the degree of circularity and the average circularity of 1 means true circle. The circularity is obtained by the following relationship, where S represents an area (number of pixels) and L represents a perimeter.

$$\text{Circularity} = 4\pi S/L^2$$

Also, circularity of resin powder for solid freeform fabrication is measured and the arithmetical mean of the measuring results can be used as the average circularity.

One simple way to obtain the circularity is to measure resins using a wet process flow type particle size and form analyzer (FPIA-3000, manufactured by Sysmex Corporation) followed by quantification. This wet process flow type particle size and form analyzer takes images of particles in a suspension flowing in a glass cell at high speed by a charge-coupled device (CCD) and analyzes individual particle images in real time. This device is capable of taking images of such particles and analyzing the images, which is suitable to obtain the average circularity. The number of measuring counts of the particles is not particularly limited and preferably 1,000 or greater and more preferably 3,000 or greater.

Form of Resin Particle

Forms of the resin particle are not particularly limited and include irregular forms without unity in size and form obtained by pulverizing or shearing resins and substantially columnar forms and substantially spherical forms obtained through particular processes. Of these, columnar forms are preferable.

The resin particle having a substantially columnar form has an end surface, i.e., base or top surface and a side surface, which connects the base and top surface. The substantially columnar forms include, for example, substantially cylindrical forms and substantially polygonal forms. Forms of the base and the top surface are not particularly limited and can be suitably selected to suit to a particular application. Resin particles having a circular or ellipsoidal base and top surface are substantially cylindrical. Resin particles having a polygonal such as quadrilateral or hexagon base and top are substantially polygonal prism. The forms of the base and the form of the top surface are not necessarily the same as long as the portion between the base and the top surface has a columnar or tubular form. In addition, the form may be a straight solid in which the side surface is orthogonal to the base or the top surface or a slanted solid in which the side surface is not orthogonal to the base or the top surface.

Because the form of the resin particle is substantially columnar, powder obtained has a high level of smoothness even when the recoating speed is increased. The surface property of a solid freeform fabrication object obtained can be furthermore enhanced as a result. The substantially columnar form is preferably a straight solid having a base and a top surface substantially parallel to each other in terms of productivity and stability of fabrication. Resin particles having a substantially columnar form can be observed and determined by, for example, an instrument such as a scanning electron microscope (S4200, manufactured by Hitachi Ltd.) or a wet-process particle size and form analyzer (FPIA-3000, manufactured by Sysmex Corporation).

Of the substantially columnar forms, substantially cylindrical forms are preferable. If resin particles have a substantially cylindrical form, the resin particles are readily closest-packed when a solid freeform fabrication object is manufactured, which enhances the strength of the solid freeform fabrication object obtained. The substantially cylindrical form includes a true circle cylindrical form and an elliptical cylindrical form. Of these, resin particles having a form closer to a true circle cylindrical form are preferable. In addition, the substantially circular portion of a substantially cylindrical form has a ratio of the major axis to the minor axis of from 1 to 10 and also includes a figure having a partially chipped-off portion. The substantially cylindrical form preferably has substantially circular planes facing each other. The size of the circles facing each other may not be identical. However, the ratio of the large surface to the small surface is preferably 1.5 or less and more preferably 1.1 or less to increase the density.

Of the substantially columnar forms, forms having at least one end surface partially covering the side surface is preferable and forms having both end surfaces partially covering the side surface is more preferable. The peripheral of an end surface extends along the side surface in a form having a side surface partially covered with the end surface. In other words, the end surface and the side surface smoothly continuous via the peripheral of the end surface having a curved form. The fluidity of resin powder for solid freeform fabrication including a substantially columnar form can be enhanced by extending of the perimeter of the end surfaces to partially cover the side surface, which rounds the angled portions of the substantially columnar form. The smoothness of a thin layer formed with the resin powder can be maintained even when the recoating speed is increased.

The particle diameter of resin particles is not particularly limited. The length of the side surface is preferably from 10 to 150 $\mu$m and the circle equivalent length (diameter) of the top surface and the base is preferably from 10 to 150 $\mu$m.

Method of Manufacturing Resin Particle

One way to obtain resin particles having substantially columnar forms is to fibrerize resins, cut the fiberized resin materials, and optionally spheroidize the obtained resin particles having a part of the side surface covered with at least one of the end surfaces of the substantially columnar forms. Resin particles having substantially columnar forms can be also manufactured from resins having film-like forms in addition to such a processing method. Resin particles having a substantially cylindrical form may be manufactured by subjecting resin particles having a substantially columnar form to post-processes.

One way to fiberize resins is to draw a molten resin into a fibrous form using an extruder during stirring at temperatures 30 degrees C or higher than the melting point. It is preferable to draw the molten resin to a ratio of about 1/1 to about 1/10 to obtain the fiber. The form of the base of the columnar form manufactured depends on the nozzle form of an extruder. If the form of the base of a columnar form, i.e., the cross section of fiber, is circular, a nozzle having a circular form is used. In the case of a polygonal form, a nozzle is selected in accordance with the form. It is preferable that the dimension accuracy of a solid freeform fabrication object be higher. The circular form of an end surface is at least 10 percent or less at radius difference. In addition, it is preferable to have more nozzles to enhance productivity.

In the cutting, fibrous materials made of a polyester-based resin manufactured by the fiberization are cut (severed) by air or a cutting tool such as an edge tool to manufacture resin particles having a substantially columnar form. The cutting tool is not particularly limited. It is suitable to use a known device such as a cutting machine employing a guillotine method using a pair of an upper blade and a lower blade or a cutting machine employing a straw cutter method of cutting with a pair of an upper blade and a board placed on the bottom. It is also preferable to use a known device such as a device for directly cutting fibrous materials to a size of from 0.005 to 0.2 mm or a device using a $CO_2$ laser. Resin particles having a substantially columnar form can be obtained by such methods.

It is preferable that, in the spheroidization, the cut material obtained in the cutting be stirred to melt the surface thereof due to mechanical abrasion and cover a part of the side surface with at least one of the end surfaces of a substantially columnar form. Examples of the spheroidizing methods include, but are not limited to, a method of colliding cut materials with each other and a method of colliding a cut material with a substance other than the other cut material. The rate of rotation during the stirring is preferably from 500 to 10,000 rpm. The rotation time during the stirring is preferably from 1 to 60 minutes.

It is preferable to pulverize resin pellets to obtain resin particles having an irregular form and other processes. To be specific, resin particles having an irregular form are obtained by mechanically pulverizing resin pellets using a known pulverizer and classifying the obtained resin powder to remove resin particles having particle diameters outside the target. The temperature during the pulverization is preferably 0 degrees C or lower (lower than the brittle temperature of each resin), more preferably -25 degrees C or lower, and particularly preferably -100 degrees C or lower to enhance pulverization efficiency.

Resin particles having a substantially spherical form are obtained by processes such as melting and kneading resins. Heated dispersion medium and a resin are mixed and kneaded at temperatures higher than the softening point of the resin and lower than the melting point thereof to form a sea-island structure of the resin and the dispersion medium, from which the dispersion medium is removed. Particles having a substantially spherical form are thus obtained.

Toughening Agent

Toughening agents are added to mainly enhance the strength and serve as a filler. The toughening agent include, but are not limited to, glass filler, glass bead, carbon fiber, aluminum balls, and materials listed in the pamphlet of WTO 2008/57844. These can be used alone or in combination and may be contained in a resin.

Anti-oxidant

Specific examples of the antioxidant include, but are not limited to, metal inactivators such as hydrazide-based agents and amide-based agents, radical scavengers such as phenol-based (hindered phenol-based) agents and amino-based agents, peroxide decomposers such as phosphate-based agents and sulfur-based agents, and ultraviolet absorbents such as triadine-based agents. These can be used alone or in combination. In particular, the combinational use of a radical scavenger and a peroxide decomposer is effective.

Fluidizer

Spherical particles made of inorganic materials are preferable as the fluidizer.
Specific examples of the inorganic materials for use in fluidizers include, but are not limited to, silica, alumina, titania, zinc oxide, magnesium oxide, tin oxide, iron oxide, copper oxide, hydrated silica, silica having a surface modified by a silane coupling agent, and magnesium silicate. In particular, silica, titania, hydrated silica, and silica having a surface modified by a silane coupling agent are effective and preferable. In terms of cost, silica having a surface modified to be hydrophobic by a silane coupling agent is more preferable. These can be used alone or in combination. It is possible to maintain smoothness of a thin layer due to a fluidizer contained in a resin powder for solid freeform fabrication even when the recoating speed is increased.

Device for Fabricating Solid Freeform Fabrication Object

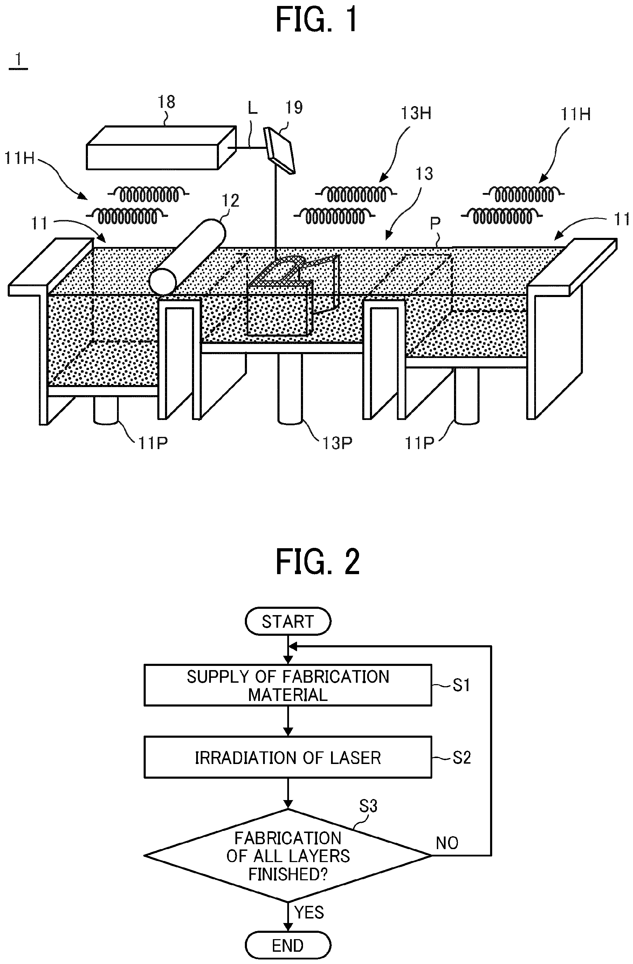

A device for fabricating a solid freeform fabrication object from the resin powder for solid freeform fabrication is described with reference to FIG. 1. FIG. 1 is a schematic diagram illustrating an example of the device for fabricating a solid freeform fabrication object.
As illustrated in FIG. 1, a fabrication device 1 includes a supply tank 11, a roller 12 as a recoater, a laser scanning space 13, an electromagnetic irradiation source 18, a reflection mirror 19, and heaters 11H and 13H.
The supply tank 11 is an example of an accommodating device that accommodates a resin powder P for solid freeform fabrication as a fabrication material.
The roller 12 is an example of a layer forming device and moves and supplies the resin powder P accommodated in the supply tank 11 to the laser scanning space 13. The laser scanning space 13 is where a laser L scans as electromagnetic rays. A layer having a predetermined thickness (corresponding to a thin layer equal to a layer formed with resin powder for solid freeform fabrication) is formed by the roller 12. The electromagnetic irradiation source 18 emits the laser L as a melting device. The moving speed (recoating speed) of the roller 12 is preferably 210 mm/minute or greater, more preferably 220 mm/minute or greater, and furthermore preferably 230 mm/minute or greater. When the moving speed of the roller 12 is 210 mm/minute or greater, the fabrication efficiency for a solid freeform fabrication object increases but smoothness of a thin layer formed tends to deteriorate when existing resin powder for solid freeform fabrication is used. By contrast, in the case of the resin powder for solid freeform fabrication of the present embodiment, the smoothness of a thin layer can be maintained even when the roller 12 moves at 210 mm/minute or greater. The moving speed of the roller 12 is preferably 295 mm/minute or lower and more preferably 290 mm/minute or lower.
The reflection mirror 19 reflects the laser L emitted by the electromagnetic irradiation source 18 to a predetermined position in the laser scanning space 13. The electromagnetic irradiation source 18 and the reflection mirror 19 are one example of the laser irradiators. The reflection surface of the reflection mirror 19 moves in response to the three-dimensional (3D) data while the electromagnetic irradiation source 18 emits the laser L. The 3D data refers to each cross section obtained by slicing a 3D model with a predetermined interval. A predetermined layer shown by the 3D data in the laser scanning space 13 is selectively exposed to the laser L by changing the reflection angle of the laser L. The resin powder positioned at the exposure position to the laser L melts and sinters to form a fabrication layer. That is, the electromagnetic irradiation source 18 serves as a layer forming device to form each layer of a fabrication object from the resin powder P. The heaters 11H and 13H respectively heat the resin powder P in the supply tank 11 and the resin powder P accommodated in the laser scanning space 13.
In addition, the supply tank 11 and the laser scanning space 13 of the solid freeform fabrication device 1 respectively includes pistons 11P and 13P. The pistons 11P and 13P respectively move the supply tank 11 and the laser scanning space 13 up or down along the lamination direction of a fabrication object at the completion of layer fabrication.

Fresh resin powder P for use in fabrication for the next layer can be accordingly supplied from the supply tank 11 to the laser scanning space 13.

The fabrication device 1 may change the exposure point of the laser L by the reflection mirror 19 to selectively melt the resin powder P. The resin powder P is applicable to fabrication devices employing selective mask sintering (SMS) methods and high speed sintering (HSS). In the SMS method, for example, the resin powder P is partially masked by a shielding mask and the unmasked portion is exposed to electromagnetic rays such as infrared rays so that the resin powder P is selectively melted to obtain a fabrication object. In the case of using the SMS methods, the resin powder P preferably contains at least one of a heat absorbent to reinforce infrared absorbency, dark material, or other substances. Preferred examples of the heat absorbent or the dark material include, but are not limited to, carbon fiber, carbon black, carbon nano tube, and cellulose nano fiber. In the HSS methods, a solution for fabrication containing a radioactive energy absorbent is discharged and radioactive energy is applied to the fabrication area in a powder layer to fuse the resin powder P.

Fabrication Method

The method of fabricating a solid freeform fabrication object with a resin powder for solid freeform fabrication is described with reference to FIG. 2. FIG. 2 is a flowchart illustrating an example of the method of fabricating a solid freeform fabrication object.

As illustrated in Step 1, the resin powder P as a fabrication material is supplied to form a layer (S1). The roller 12 moves the resin powder P as the fabrication material from the supply tank 11 to the laser scanning space 13. A powder layer corresponding to an amount of a layer is formed.

As illustrated in Step 2, the fabrication material supplied is exposed to electromagnetic radiation (e.g., laser beams) to melt it (Step 2). The reflection surface of the reflection mirror 19 moves based on the fabrication data for the predetermined layer and the electromagnetic irradiation source 18 emits laser beams. Due to the exposure to the laser beam L, the resin powder P positioned corresponding to the pixel indicated by the data for the predetermined layer melts among the powder layers. The resin melted at the exposure to the laser beam L solidifies, thereby forming a fabrication layer corresponding to an amount of a layer.

Next, as illustrated in Step 3, whether all the layers are fabricated is determined. Because the fabrication data includes data for multiple layers, whether fabrication relating to the data for all the layers is finished is determined. If all is complete (Yes at Step 3), the fabrication is finished. If not all the fabrication is finished (No at Step 3), the supply tank 11 and the laser scanning space 13 are moved up or down along the lamination direction of the fabrication object and the fabrication returns to Step 1. The layer forming (Step 1) and the melting (Step 2) are repeated to laminate fabrication layers to fabricate a solid freeform fabrication object. The heaters 11H and 13H may respectively heat the resin powder P in the supply tank 11 and the resin powder P in the laser scanning space 13 in Step 1 and Step 2.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

The flow velocity index, the solid freeform energy, the mean volume diameter (Mv), the ratio (Mv/Mn) of mean volume diameter/mean number diameter (Mn), and the average circularity are measured as follows. The measuring results are shown in Table 1.

Flow Velocity Index

The total energy 1 (hereinafter referred to as E1) and the total energy 2 (hereinafter referred to as E2) were measured using a powder flow tester (Powder Rheometer® FT4, manufactured by Freeman Technology Ltd.) as a powder flowability analyzer and E1 was divided by E2 to calculate the flow velocity index. The powder flow tester calculates E1 and E2 from the torque and load acting on a rotating blade moving through a resin powder for solid freeform fabrication. A 25 ml spirit vessel (cup diameter of 25 mm) and a blade having a blade diameter of 23.5 mm were used for measuring E1 and E2.

E1 of the resin powder for solid freeform fabrication was obtained in the following manner using a powder flow tester. A resin powder for solid freeform fabrication was slowly loaded into a 25 ml spirit vessel and subjected to conditioning treatment five times using a powder flow tester followed by scraping-off to remove excessive resin powder for solid freeform fabrication. The resin powder for solid freeform fabrication after the conditioning treatment was placed in the powder flow tester to measure E1 according to the following measuring conditions 1.

Measuring Conditions 1

- Rate of rotation of blade: -10 mm/s
- Invasion angle of blade: - 5 degree

E2 of the resin powder for solid freeform fabrication was obtained in the following manner using a powder flow tester. A resin powder for solid freeform fabrication was slowly loaded into a 25 ml spirit vessel and subjected to conditioning treatment five times using a powder flow tester followed by scraping-off to remove excessive resin powder for solid freeform fabrication. The resin powder for solid freeform fabrication after the conditioning treatment was placed in a powder flow tester to measure E2 according to the following measuring conditions 2.

Measuring Conditions 2

- Rate of rotation of blade: -100 mm/s
- Invasion angle of blade: -5 degree

Shearing Energy

The shearing energy was calculated by dividing E1 calculated in Flow Velocity Index by the conditioning aerated bulk density of the resin powder for solid freeform fabrication calculated by the powder flow tester (Powder Rheometer® FT4, manufactured by Freeman Technology Ltd.). The powder flowability analyzer (powder flow tester) put a blade in rotation into a resin powder for solid freeform fabrication to make the resin powder for solid freeform fabrication uniform (conditioning treatment). A 25 ml spirit vessel (cup diameter of 25 mm) and a blade having a blade diameter of 23.5 mm were used for conditioning treatment.
The conditioning aerated bulk density of the resin powder for solid freeform fabrication was obtained in the following manner using a powder flow tester. A resin powder for solid freeform fabrication was slowly loaded into a 25 ml spirit vessel and subjected to conditioning treatment five times using a powder flow tester followed by scraping-off to remove excessive resin powder for solid freeform fabrication. The mass of the resin powder for solid freeform fabrication after the conditioning treatment was divided by the volume of the spirit vessel to calculate the conditioning aerated bulk density.

Mean Volume Diameter (Mv) and Mean Volume Diameter (Mv)/Mean Number Diameter (Mn)

The mean volume diameter (Mv) was measured using a particle size distribution measuring instrument (Microtrac MT3300EXII, manufactured by MicrotracBEL Corp.). The mean number diameter (Mn) was measured at the same time and the ratio (Mv/Mn) was calculated by dividing Mv by Mn.

Average Circularity

A particle image in a state where the number of powder particles was 3,000 or more was taken by a wet-process flow type particle size and form analyzer (FPIA-3000, manufactured by Sysmex Corporation) to obtain the circularity of particles having a diameter of from 0.5 to 200 $\mu$m. The average of the circularity was calculated as the average circularity.

Example 1

A polybutylene terephthalate (PBT) resin (NOVADURAN® 5020, manufactured by Mitsubishi Engineering-Plastics Corporation) was subjected to frost shattering at -200 degrees C using a cyrogenic grinding unit (LINREX MILL LX1, manufactured by Hosokawa Micron Corporation) to obtain a resin powder for solid freeform fabrication having a particle diameter of from 5 to 200 $\mu$m followed by removing particles having a particle diameter of 150 $\mu$m or greater with a sieve. Resin particles were thus obtained.
A fluidizer (RX200, manufactured by Evonik Industries AG) at 0.02 percent by mass was then added to the resin particles obtained followed by mixing by a powder mixer (Henschel Mixer, manufactured by NIPPON COKE & ENGINEERING. CO., LTD.) for five minutes to obtain a resin powder for solid freeform fabrication of Example 1.

Example 2

A resin powder for solid freeform fabrication of Example 2 was obtained in the same manner as in Example 1 except that particles having a particle diameter of 125 $\mu$m or greater and particles having a particle diameter of 32 $\mu$m or less were removed by sieves.

Example 3

Resin particles for solid freeform fabrication were obtained in the same manner as in Example 1 except that particles having a particle diameter of 105 $\mu$m or greater were removed by a sieve.
The resin particles obtained were subjected to spheroidization using a spheroidizing device (Meteorainbow MR-10, manufactured by Nippon Pneumatic Mfg. Co., Ltd.) at 300 degrees C with three passes to obtain a resin powder for solid freeform fabrication of Example 3 having a spherical form.

Example 4

A resin powder for solid freeform fabrication of Example 4 was obtained in the same manner as in Example 1 except that the ratio of the fluidizer (RX200, manufactured by Evonik Industries AG) was changed to 0.05 percent by mass.

Example 5

Resin particles for solid freeform fabrication were obtained in the same manner as in Example 1 except that particles having a particle diameter of 105 $\mu$m or greater and particles having a particle diameter of 32 $\mu$m or less were removed by sieves. The resin particles obtained were subjected to spheroidization using a spheroidizing device (Meteorainbow MR-10, manufactured by Nippon Pneumatic Mfg. Co., Ltd.) at 300 degrees C with three passes to obtain a resin powder for solid freeform fabrication having a spherical form.
A fluidizer (RX200, manufactured by Evonik Industries AG) at 0.03 percent by mass was then added to the resin particles obtained followed by mixing by a powder mixer (Henschel Mixer, manufactured by NIPPON COKE & ENGINEERING. CO., LTD.) for five minutes to obtain a resin powder for solid freeform fabrication of Example 5.

Example 6

Resin particles for solid freeform fabrication were obtained in the same manner as in Example 1 except that particles having a particle diameter of 105 $\mu$m or greater and particles having a particle diameter of 32 $\mu$m or less were removed by sieves. The resin particles obtained were subjected to spheroidization using a spheroidizing device (Meteorainbow MR-10, manufactured by Nippon Pneumatic Mfg. Co., Ltd.) at 300 degrees C with one pass to obtain a resin powder for solid freeform fabrication having a spherical form.
A fluidizer (RX200, manufactured by Evonik Industries AG) at 0.01 percent by mass was then added to the resin particles obtained followed by mixing by a powder mixer (Henschel Mixer, manufactured by NIPPON COKE & ENGINEERING. CO., LTD.) for five minutes to obtain a resin powder for solid freeform fabrication of Example 6.

Example 7

A resin powder for solid freeform fabrication of Example 7 was obtained in the same manner as in Example 6 except that the resin particles obtained were subjected to spheroidization at 300 degrees C with three passes.

Example 8

A resin powder for solid freeform fabrication of Example 8 was obtained in the same manner as in Example 7 except that the ratio of the fluidizer (RX200, manufactured by Evonik Industries AG) was changed to 0.04 percent by mass.

Example 9

Pellets of PBT resin (NOVADURAN® 5020, melting point of 225 degrees C, glass transition temperature of 43 degrees C, manufactured by Mitsubishi Engineering-Plastics Corporation) were stirred at a temperature 30 degrees C higher than the melting point using an extruder (manufactured by The Japan Steel Works, LTD.), and fiber was then obtained using a nozzle having a circular form. The fiber was drawn to a factor of about three to obtain a resin fiber having a fiber diameter of 50 $\mu$m with an accuracy of from -4 to 4 $\mu$m. The resin fiber obtained was cut to have a fiber length of 50 $\mu$m by a cutting machine (NJ series 1200 type, manufactured by OGINO SEIKI CO., LTD.) employing a straw cutting method. Resin particles were thus obtained. The resin particles obtained were subjected to spheroidization using a spheroidizing device (Meteorainbow MR-10, manufactured by Nippon Pneumatic Mfg. Co., Ltd.) at 300 degrees C with three passes to obtain a resin powder for solid freeform fabrication having a spherical form (in other words, at least one end surface of the substantially columnar form partially covering the side surface). The spheroidized resin particles obtained were determined as the resin powder for solid freeform fabrication of Example 9.

Example 10

A resin powder for solid freeform fabrication of Example 10 was manufactured in the same manner as in Example 9 except that the fiber diameter was changed to 70 $\mu$m and the fiber length was changed to 70 $\mu$m.

Example 11

A resin powder for solid freeform fabrication of Example 11 was manufactured in the same manner as in Example 9 except that the resin of Example 9 was changed to PEEK resin (151G, manufactured by Victrex plc.), the fiber diameter was changed to 30 $\mu$m, and the fiber length was changed to 30 $\mu$m.

Example 12

Resin particles were obtained in the same manner as in Example 9 except that the resin of Example 9 was changed to polypropylene (PP) resin (J704UG, manufactured by Prime Polymer Co., Ltd.). The resin particles obtained were subjected to spheroidization using a spheroidizing device (Meteorainbow MR-10, manufactured by Nippon Pneumatic Mfg. Co., Ltd.) at 300 degrees C with three passes to obtain a resin powder for solid freeform fabrication having a spherical form (in other words, at least one end surfaces of the substantially columnar form partially covering the side surface).
A fluidizer (EPOSTAR™, manufacture by Nippon Shokubai Co., Ltd.) at 0.03 percent by mass was then added to the resin particles obtained followed by mixing by a powder mixer (Henschel Mixer, manufactured by NIPPON COKE & ENGINEERING. CO., LTD.) for five minutes to obtain a resin powder for solid freeform fabrication of Example 12.

Example 13

A resin powder for solid freeform fabrication of Example 13 was obtained in the same manner as in Example 9 except that the resin particles obtained were not subjected to spheroidization.

Comparative Example 1

PP resin (J704UG, manufactured by Prime Polymer Co., Ltd.) was added to a dispersion medium (PEG20000, manufactured by Sanyo Chemical Industries, Ltd.) at 15 kg. Subsequent to sufficient mixing, the resulting mixture was mixed and kneaded in a pressure kneader at 180 degrees C for five minutes and allowed to stand for three minutes. The dispersant (PEG20000, manufactured by Sanyo Chemical Industries, Ltd.) is not compatible with polypropylene and the solubility of polypropylene to the dispersion medium was 0.1 percent at 180 degrees C. Thereafter, the resulting liquid mixture was cooled down to 120 degrees C and the dispersion medium alone was dissolved in about 100 L of a dispersion water to obtain a suspension. The resulting suspension was classified by a centrifugal method and filtering method to obtain resin particles, which was determined as resin powder for solid freeform fabrication of Comparative Example 1.

Comparative Example 2

Particles having a particle diameter of 104 $\mu$m or greater and particles having a particle diameter of 26 $\mu$m or less were removed by sieves from the resin particles obtained in Comparative Example 1 followed by enhancing the degree of sphere of the particles by a spheroidizing device (Meteorainbow MR-10, manufactured by Nippon Pneumatic Mfg. Co., Ltd.) at 200 degrees C with three passes.
A fluidizer (RX200, manufactured by Evonik Industries AG) at 0.02 percent by mass was then added to the resin particles obtained followed by mixing by a powder mixer (Henschel Mixer, manufactured by NIPPON COKE & ENGINEERING. CO., LTD.) for five minutes to obtain resin powder for solid freeform fabrication of Comparative Example 2.

Comparative Example 3

A polybutylene terephthalate (PBT) resin (NOVADURAN® 5020, melting point of 218 degrees C, glass transition temperature of 43 degrees C, manufactured by Mitsubishi Engineering-Plastics Corporation) was subjected to frost shattering at -200 degrees C using a cyrogenic grinding unit (LINREX MILL LX1, manufactured by Hosokawa Micron Corporation) to obtain a resin powder for solid freeform fabrication having a particle diameter of from 5 to 200 μm followed by removing particles having 150 μm or greater with a sieve. Resin particles were thus obtained.

A fluidizer (RX200, manufactured by Evonik Industries AG) at 0.03 percent by mass was then added to the resin particles obtained followed by mixing by a powder mixer (Henschel Mixer, manufactured by NIPPON COKE & ENGINEERING. CO., LTD.) for five minutes to obtain a resin powder for solid freeform fabrication of Comparative Example 3.

Comparative Example 4

Nylon 12 (DADIAMID 1640, manufactured by Daicel Corporation) at 5 kg was mixed well with polyethylene oxide R150 (manufactured by Meisei Chemical Works, Ltd.) at 6.5 kg and the resulting mixture was uniformly heated and kneaded at 230 degrees C in a pressure kneader having a twin shaft. The resulting mixture was then cooled down to 150 degrees C and mixed with 100 L of water to dissolve the polyethylene oxide R150 alone, so that a suspension containing fine spheres was obtained. This solution was subjected to centrifugal followed by drying separated solid potions to obtain resin particles.

A fluidizer (RX200, manufactured by Evonik Industries AG) at 0.02 percent by mass was then added to the resin particles obtained followed by mixing by a powder mixer (Henschel Mixer, manufactured by NIPPON COKE & ENGINEERING. CO., LTD.) for five minutes to obtain resin powder for solid freeform fabrication of Comparative Example 4.

Table 1

| C | Condition for manufacturing resin powder for solid freeform fabrication | | | | |
|---|---|---|---|---|---|
| | Resin | Fluidizer | Fluidizer | Spheroidization | Particle form |
| Example 1 | PBT | RX200 | 0.02 percent by mass | None | Irregular |
| Example 2 | PBT | RX200 | 0.02 percent by mass | None | Irregular |
| Example 3 | PBT | None | None | 3 pass | Substantially truly spherical |
| Example 4 | PBT | RX200 | 0.05 percent by mass | None | Irregular |
| Example 5 | PBT | RX200 | 0.03 percent by mass | 3 pass | Substantially truly spherical |
| Example 6 | PBT | RX200 | 0.01 percent by mass | 1 pass | Substantially truly spherical |
| Example 7 | PBT | RX200 | 0.01 percent by mass | 3 pass | Substantially truly spherical |
| Example 8 | PBT | RX200 | 0.04 percent by mass | 3 pass | Substantially truly spherical |
| Example 9 | PBT | None | None | 3 pass | Substantially cylindrical |
| Example 10 | PBT | None | None | 3 pass | Substantially cylindrical |
| Example 11 | PEEK | None | None | 3 pass | Substantially cylindrical |
| Example 12 | PP | Epostar™ | 0.03 percent by mass | 3 pass | Substantially cylindrical |

(continued)

| C | Condition for manufacturing resin powder for solid freeform fabrication | | | | |
|---|---|---|---|---|---|
| | Resin | Fluidizer | Fluidizer | Spheroidization | Particle form |
| Example 13 | PBT | None | None | None | Substantially cylindrical |
| Comparative Example 1 | PP | None | None | None | Substantially truly spherical |
| Comparative Example 2 | PP | RX200 | 0.02 percent by mass | 3 pass | Substantially truly spherical |
| Comparative Example 3 | PBT | RX200 | 0.03 percent by mass | None | Irregular |
| Comparative Example 4 | PA12 | RX200 | 0.02 percent by mass | None | Substantially truly spherical |

| C | Property values | | | | |
|---|---|---|---|---|---|
| | Mv | Mv/Mn | Average circularity | Flow velocity index | Shearing energy $(mJ \cdot cm^3/g)$ |
| Example 1 | 72 | 1.32 | 0.75 | 1.20 | 660 |
| Example 2 | 73 | 1.21 | 0.79 | 1.16 | 660 |
| Example 3 | 70 | 1.35 | 0.91 | 1.20 | 280 |
| Example 4 | 75 | 1.38 | 0.76 | 1.18 | 550 |
| Example 5 | 75 | 1.12 | 0.92 | 1.18 | 340 |
| Example 6 | 70 | 1.13 | 0.88 | 1.16 | 540 |
| Example 7 | 70 | 1.13 | 0.94 | 1.16 | 480 |
| Example 8 | 68 | 1.13 | 0.95 | 1.15 | 320 |
| Example 9 | 76 | 1.12 | 0.85 | 1.14 | 320 |
| Example 10 | 90 | 1.15 | 0.84 | 1.15 | 440 |
| Example 11 | 52 | 1.12 | 0.82 | 1.10 | 360 |
| Example 12 | 72 | 1.14 | 0.83 | 1.15 | 420 |
| Example 13 | 80 | 1.16 | 0.81 | 1.21 | 300 |
| Comparative Example 1 | 50 | 1.35 | 0.91 | 1.39 | 123 |
| Comparative Example 2 | 48 | 1.08 | 0.98 | 1.04 | 80 |
| Comparative Example 3 | 88 | 2.16 | 0.82 | 1.28 | 673 |
| Comparative Example 4 | 39 | 1.18 | 0.93 | 1.23 | 259 |

The resin powders for solid freeform fabrication obtained were evaluated on the upper speed limit of recoating and accumulation of resin powder for solid freeform fabrication at recoating as follows. The results are shown in Table 2.

Upper Speed Limit of Recoating

An SLS method fabrication device (AM S5500P, manufactured by Ricoh Co., Ltd.) was used for an additive manufacturing experiment with the obtained resin powder. The conditions were that the average thickness of the powder layer was 0.1 mm and the temperature of additive manufacturing was set to -5 degrees C lower than the resin. The recoating speed started from 200 mm/minute and increased by 10 mm/minute. The speed at 10 mm/minute slower than the speed below which the additive layer surface was not rough was determined as the upper speed limit of recoating. Whether there was roughness on the additive layer surface was visually checked to determine whether the additive layer surface was rough.

Accumulation of Resin Powder for Solid Freeform Fabrication during Recoating

An SLS method fabrication device (AM S5500P, manufactured by Ricoh Co., Ltd.) was used for an additive manufacturing experiment with the obtained resin powder. The conditions were that the average thickness of the powder layer was 0.1 mm and the temperature of additive manufacturing was set to -5 degrees C lower than the resin. The speed recoating was defined as the speed obtained in the evaluation of the upper speed limit mentioned above. Whether the powder for solid freeform fabrication accumulating on the cover of the recoater was visually checked after 1,000 layers (corresponding to a thickness of 10 cm) were laminated and the degree of the accumulation was evaluated according to the following evaluation criteria.

Evaluation Criteria

A: Resin powder minimally accumulated
B: Resin powder slightly accumulated
C: Resin powder clearly accumulated

Table 2

| | | Evaluation result | |
|---|---|---|---|
| | | Upper speed limit of recoating | Accumulation of resin powder for solid freeform fabrication during recoating |
| | Example 1 | 230 mm/minute | A |
| | Example 2 | 230 mm/minute | A |
| | Example 3 | 230 mm/minute | B |
| | Example 4 | 250mm/minute | A |
| | Example 5 | 270mm/minute | A |
| | Example 6 | 270mm/minute | A |
| | Example 7 | 270 mm/minute | A |
| | Example 8 | 270 mm/minute | A |
| | Example 9 | 290mm/minute | A |
| | Example 10 | 290mm/minute | A |
| | Example 11 | 290mm/minute | A |
| | Example 12 | 290mm/minute | A |
| | Example 13 | 280mm/minute | A |
| | Comparative Example 1 | 200mm/minute | B |
| | Comparative Example 2 | 300mm/minute | C |
| | Comparative Example 3 | 200mm/minute | A |
| | Comparative Example 4 | 200mm/minute | B |

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1. A resin powder for solid freeform fabrication comprising:

   resin particles,
   wherein the resin powder has a flow velocity index of from 1.05 to 1.21.

2. The resin powder according to claim 1, wherein the flow velocity index is from 1.05 to 1.16.

3. The resin powder according to claim 1 or 2, wherein the resin particles comprise at least one member selected from the group consisting of a polyolefin resin, polyamide resin, polyester resin, polyether resin, polyphenylene sulfide resin, liquid crystal polymer, polyacetal resin, polyimide resin, and fluorochemical resin.

4. The resin powder according to any one of claims 1 to 3, wherein a shearing energy of the resin powder is from 300 to 650 mJ·cm$^3$/g.

5. The resin powder according to claim 4, wherein the shearing energy of the resin powder is from 300 to 500 mJ·cm$^3$/g.

6. The resin powder according to any one of claims 1 to 5, wherein the resin particles have an average circularity of from 0.80 to 0.96.

7. The resin powder according to any one of claims 1 to 6, wherein a ratio of a value of a mean volume diameter (Mv) of the resin particles to a value of a mean number diameter (Mn) of the resin particles is from 1.10 to 1.17.

8. The resin powder according to any one of claims 1 to 7, wherein the resin particles have a substantially cylindrical form.

9. The resin powder according to any one of claims 1 to 7, wherein the resin particles have a substantially columnar form having end surfaces and a side surface partially covered with at least one of the end surfaces.

10. A device (1) for fabricating a solid freeform fabrication object, comprising:

    an accommodating device (11) accommodating a resin powder;
    a layer forming device (12) configured to move the resin powder accommodated in the accommodating device (11) and form a layer containing the resin powder; and
    a melting device (18) configured to melt the layer with electromagnetic radiation,
    wherein the resin powder comprises resin particles and has a flow velocity index of from 1.05 to 1.21.

11. The device (1) according to claim 10, wherein the layer forming device (12) moves at 210 mm/minute or more when moving the resin powder to form the layer containing the resin powder.

12. A method of fabricating a solid freeform fabrication object, comprising:

    forming a layer containing a resin powder for solid freeform fabrication by moving the resin powder by a layer forming device;
    melting the layer by irradiating the layer with electromagnetic radiation; and
    repeating the forming and the melting,
    wherein the resin powder comprises resin particles and has a flow velocity index of from 1.05 to 1.21.

13. The method according to claim 12, wherein the layer forming device moves at 210 mm/minute or more when moving the resin powder to form the layer containing the resin powder.

# FIG. 1

# FIG. 2

START

SUPPLY OF FABRICATION MATERIAL ─S1

IRRADIATION OF LASER ─S2

FABRICATION OF ALL LAYERS FINISHED? ─S3   NO

YES

END

Europäisches
Patentamt

European
Patent Office

Office européen
des brevets

# EUROPEAN SEARCH REPORT

Application Number

EP 20 18 7188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/022024 A1 (SAITO AKIRA [JP] ET AL) 25 January 2018 (2018-01-25) * paragraphs [0002], [0046], [0047], [0050] - [0052], [0062], [0077] - [0079], [0090], [0114], [0136] - [0143]; claims 1,4,5,9,12,13; figure 2; examples; tables 2-3 * ----- | 1-13 | INV. C08J3/12 B29B9/12 B29B9/16 B29C64/153 B29C64/218 B29C64/295 B33Y10/00 B33Y30/00 |
| X | US 2018/264720 A1 (TAMOTO NOZOMU [JP] ET AL) 20 September 2018 (2018-09-20) * paragraphs [0002], [0045], [0047] - [0052], [0057], [0067], [0099] - [0101], [0134] - [0146]; claims 1,5,7,8,11,12; figures 1-3; examples; table 1 * ----- | 1-13 | |

TECHNICAL FIELDS
SEARCHED      (IPC)

C08J
B29C
B29B
B33Y

The present search report has been drawn up for all claims

| Place of search | Date of completion of the search | Examiner |
|---|---|---|
| Munich | 25 November 2020 | Pamies Olle, Silvia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

# EP 3 770 205 A1

## ANNEX TO THE EUROPEAN SEARCH REPORT
## ON EUROPEAN PATENT APPLICATION NO.

EP 20 18 7188

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2020

| Patent document cited in search report | | Publication date | Patent family member(s) | | Publication date |
|---|---|---|---|---|---|
| US 2018022024 | A1 | 25-01-2018 | CN | 107674389 A | 09-02-2018 |
| | | | EP | 3272788 A1 | 24-01-2018 |
| | | | EP | 3750943 A1 | 16-12-2020 |
| | | | US | 2018022024 A1 | 25-01-2018 |
| US 2018264720 | A1 | 20-09-2018 | EP | 3375609 A1 | 19-09-2018 |
| | | | US | 2018264720 A1 | 20-09-2018 |

EPO FORM P0459

For more details about this annex : see Official Journal of the European Patent Office, No. 12/82

**REFERENCES CITED IN THE DESCRIPTION**

**Patent documents cited in the description**

- JP 6193493 B

- WO 20115194678 A